Europäisches Patentamt

European Patent Office

Office européen des brevets

(11) Publication number: **0 426 599 A2**

# EUROPEAN PATENT APPLICATION

(21) Application number: 90480159.4

(51) Int. Cl.⁵: **G06F 15/16**

(22) Date of filing: 09.10.90

(30) Priority: 30.10.89 US 428574

(43) Date of publication of application:
08.05.91 Bulletin 91/19

(84) Designated Contracting States:
DE FR GB

(71) Applicant: INTERNATIONAL BUSINESS
MACHINES CORPORATION

Armonk, NY 10504(US)

(72) Inventor: **Ordanic, Zvonimir**
10740 Dunhill Terrace
Raleigh, NC 27615(US)
Inventor: **Eisenbies, John Lawrence**
700 Greencove Ct.
Raleigh, NC 27609(US)

(74) Representative: **Bonneau, Gérard**
Compagnie IBM France Département de
Propriété Intellectuelle
F-06610 La Gaude(FR)

(54) Method of clustering nodes in a distributed computer network.

(57) A method of clustering nodes in a distributed computer network to reduce the overall processing and storage requirements at the network nodes. The network is partitioned into subsets (25, 75) with one node (10, 100) in each cluster designated as the cluster control point. The cluster control point represents the cluster as a single node (25 or 75) to the external part of the network. It maintains an internal topology database of network resources within the cluster and an external topology database of network resources outside the cluster for use in determining routes for sessions throughout the distributed network. The cluster control point (10, 100) is the focal point in assisting the external part of the network to locate network resources internal to the cluster and in assisting the internal nodes to locate network resources external to the cluster. Internal resources found as a result of a search are maintained in an internal directory cache at the cluster control point, and external resources found are maintained in an external directory cache.

FIG. 1

# METHOD OF CLUSTERING NODES IN A DISTRIBUTED COMPUTER NETWORK

The present invention relates to computer networks and, more particularly, to a method for clustering nodes in a distributed network wherein an entire cluster of nodes appears to the rest of the network as a single network node.

A communication network can be defined generally as a collection of network nodes interconnected through communication links or transmission groups. A network node can be characterized as a data processing system that provides certain functions within a network, such as routing of messages between itself and its adjacent or neighboring nodes and maintaining a topology database. The transmission groups between nodes may be composed of a single link or multiple links. The links may be permanent communication links such as conventional cable connections or links that are enabled only when needed, such as dial-up telephone connections. Collectively, the network nodes and the transmission groups between the nodes are referred to as network resources. The physical configuration and characteristics of the various nodes and transmission groups in a network are said to be the topology of the network and are kept in a topology database at each network node. Each network node uses this information to calculate available routes for sessions through the distributed network. To keep the topology database current, all network nodes must broadcast changes in the topology. Also, whenever a transmission group between two network nodes is activated or deactivated, the network nodes send a topology database update (TDU) message throughout the network using a broadcast technique that quiesces after all the topology databases are updated.

The nodes in a network utilizing a peer-to-peer architecture are capable of selecting routes and initiating sessions without intervention from a central host. The peer-to-peer network architecture is particularly suitable for dynamic networks in which the addition and deletion of resources and end users occurs very frequently. This architecture relies on a combination of dynamically maintained topology databases and automatic path computation to eliminate the need for manual definition of the network physical configuration and to provide for automatic adaptation to configuration changes. U. S. Patent 4,827,411 discloses a method for maintaining a common network topology database at different nodes in a communication network and is incorporated herein by reference.

An end user's interface to the network is referred to as a logical unit. A logical unit is a device or program that an end user uses to access the network. Two end users communicate over a logical connection called a session. Multiple sessions can exist between logical units. The logical unit that establishes the session is referred to as the primary logical unit or PLU, the other logical unit is referred to as the secondary logical unit or SLU. Each network node typically supports one or more logical units. In addition, each network node contains a control point (CP) that provides control functions such as session initiation and termination. Control points communicate with each other via CP-CP sessions.

The distributed peer-to-peer network also provides a distributed directory service. When an application, through its logical unit, wants to establish a session with another logical unit, the originating node must find out in which node the target logical unit resides so that a route can be established. A network node uses two basic mechanisms to find out in which node the logical unit resides: the local directory cache and the broadcast search. The node first searches the local directory cache to see if the location of the logical unit is already known. However, if this cache does not contain any entries about the target logical unit, the originating node broadcasts the directory request message to all adjacent control points on the existing CP-CP sessions. Each adjacent control point then determines if it owns the target logical unit, and if so, responds back indicating that the target logical unit was found also giving its own control point name. If the node does not own the target logical unit, the node continues to broadcast the directory search message to other adjacent nodes. Each network node is responsible for receiving, processing and broadcasting directory requests to other adjacent nodes.

The amount of storage required in each network node and the number of messages (either directory search or topology updates) are dependent on the total number of network nodes in the distributed network. This impact is the same on all network nodes regardless of their processing power or size.

The distributed network node contains a function called route selection services. This function computes the route for a session between a pair of logical units and is computed based on information in the topology database. The route is defined as an ordered sequence of node names and transmission group names placed in a data structure called the route selection control vector (RSCV).

When an application in one logical unit wants to communicate with an application in another logical unit, a session must first be established. To establish a session, the originating node sends a message called a BIND to the node that owns the destination logical unit. In order to specify the desired route, the RSCV is appended to the BIND message. Each node along the session path routes the BIND message based on information in the RSCV.

The purpose of clustering is to allow a computer network to be partitioned into smaller network subsets, or clusters, while continuing to provide full session connectivity. Clustering can be used to limit the scope of certain network operations, such as directory searches and topology updates, and thus improve performance of the overall distributed network as well as reduce the amount of processing and storage required in each network node.

The invention allows a cluster of nodes in a network to be treated as though it were a single node. For example, a particular computer network may have a number of small processors in one location connected via external links to other locations. If another processor is added in the first location, it will not be necessary that other locations know about the addition. In fact, the other locations may prefer not to be impacted in any way by such changes in cluster configuration.

It is thus an object of this invention to provide a method for clustering nodes in a distributed network that reduces the processing and storage required in each network node.

It is another object of this invention to provide a method for clustering nodes that allows the addition or deletion of nodes in a cluster without impacting the nodes outside the cluster.

It is a further object of this invention to provide a method for distributing topology data used for route selection within a cluster so that it is kept separate from topology data for the attached network outside of the cluster.

It is a still further object of this invention to provide a method for calculating a session path (RSCV) that spans all nodes, internal and external to a cluster.

It is a still further object of this invention to provide a method for recovering from the failure of a node or link internal to a cluster.

These and other objects are accomplished by a method in which the network nodes in a distributed computer network are partitioned into clusters of arbitrary size based on predetermined selection criteria. One criterion may be that all network nodes in a given location in a geographically dispersed network are assigned to a single cluster. The decision on which nodes to group together to form a cluster is made based on the expected amount of interaction between nodes. End nodes, which are exemplified by devices such as display terminals, intelligent work stations, printers and the like, are assumed to belong to the cluster if they have a control point to control point session with a network node within the cluster.

One node in each cluster is designated as the cluster control point and represents the cluster as a single node to the rest of the distributed network. The cluster control point maintains internal and an external topology database to keep information regarding network resources within the cluster and outside the cluster respectively which are used together to determine the actual route for a communications session between two nodes located anywhere in the network. In one embodiment, an internal node trying to determine the location of the resource searches a local directory cache maintained at the node and then initiates an internal broadcast search to other nodes in the cluster. The internal node then sends a request to the cluster control point to find the resource. The cluster control point first searches its external directory cache and then initiates an external broadcast search to adjacent network nodes outside the cluster.

Upon receiving a broadcast search from the external network, the cluster control point first checks its internal directory cache and, if not found, broadcasts internally to adjacent nodes within the cluster and externally to adjacent nodes outside the cluster.

The invention is now described in reference to the accompanying drawings wherein :

Figure 1 is a block diagram of a partial communications network within which the present invention may be practiced.

Figure 2 is a block diagram of a simple communications network that has been reduced in apparent size by clustering.

Figure 3 is a block diagram illustrating parallel transmission groups between a cluster of nodes and a single external node.

Figure 4 is a block diagram illustrating parallel transmission groups between two clusters of nodes.

Figure 5 is a flow chart illustrating the link activation algorithm of the invention.

Figure 6 is a flow chart illustrating the processing of topology database update messages at cluster control points.

Figure 7 is a flow chart illustrating the directory services function performed by the distributed nodes.

Figure 8 is a flow chart illustrating the processing of a route request in a cluster control point.

Figure 9 is a flow chart illustrating the processing of a BIND message received at a node over an external link.

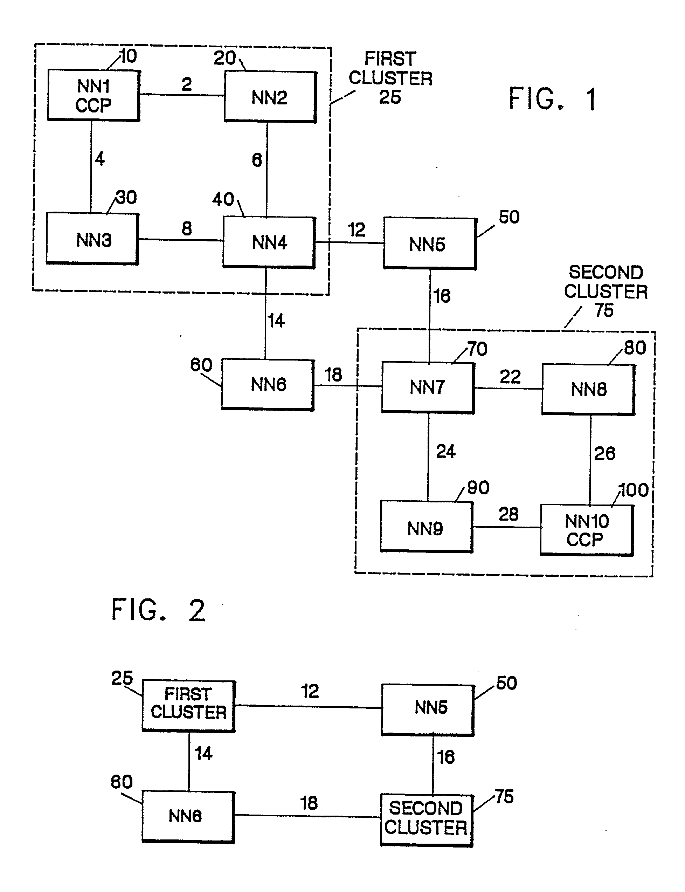

Figure 1 shows a portion of a representative communications network containing ten network nodes and two clusters. The overall network size could readily be on the order of 100,000 nodes with cluster sizes in the range of 100 to 300 nodes each. The dashed lines around network nodes in Figure 1 represent the separate clusters. The first cluster identified by reference numeral 25 includes four internal network nodes NN1, NN2, NN3 and NN4 identified by reference numerals 10, 20, 30 and 40 respectively. The second cluster identified by reference numeral 75 includes internal nodes NN7, NN8, NN9 and NN10. The respective reference numerals are 70, 80, 90 and 100. Transmission groups 2, 4, 6, and 8 are internal transmission groups between the nodes in first cluster 25 and transmission groups 22, 24, 26, 28 are internal transmission groups between the nodes in second cluster 75. Each network node in Figure 1 is a data processing system providing communications services including route selection, directory services and maintenance of a topology database. An external node is a network node outside of a cluster. Nodes NN5 and NN6 identified by reference numerals 50 and 60, and second cluster 75 represent external nodes relative to first cluster 25. Likewise, nodes NN5, NN6 and first cluster 25 are external nodes relative to second cluster 75. The reduced distributed network as a result of clustering is shown in Figure 2. First cluster 25 and second cluster 75 appear as single network nodes. The transmission groups between network nodes outside the cluster and network nodes within the cluster are defined as external transmission groups. Transmission groups 12, 14, 16 and 18 are the external transmission groups. Network nodes within a cluster that contain a mix of internal and external transmission groups are referred to as edge nodes. NN4 and NN7 are edge nodes.

In order for a user defined cluster of network nodes to behave externally as a single node, the network operator has to designate one internal node to act as the control point for the entire cluster to nodes outside of the cluster. The internal node so designated is referred to as the cluster control point (CCP). In Figure 1, NN1 is the designated cluster control point for the first cluster and NN10 is the designated cluster control point for the second cluster. The CCP informs all network nodes in the cluster of its role via a topology database update broadcast. Each network node within the cluster then updates its topology database to reflect the designation.

Two types of topology databases are defined in a distributed network containing clusters of nodes. The first is an internal topology database that is replicated only at internal nodes in a cluster. The internal topology database contains information about internal nodes and their transmission groups, both internal and external. This database contains no information regarding external nodes. The external topology database is maintained at the external nodes and at the cluster control point in each cluster. This database contains information about the external network, i.e., external nodes in transmission groups connecting those nodes. In this database, each cluster is represented as a single node identified by its cluster control point name. The external transmission groups represent connections to external nodes and the cluster control points. For both internal and external topology databases, the algorithms to update the databases are the same.

Each cluster control point maintains both an internal topology database representing the network nodes within the cluster along with their internal and external transmission groups, and an external topology database representing network nodes outside the cluster along with the external transmission groups. In addition, each cluster control point has both an internal directory cache holding information about resources (e.g., logical units) in the cluster and an external directory cache holding information about resources outside the cluster. Whenever the CCP initiates a search inside the cluster and finds the location of a resource, it saves its information in the internal directory cache. The external directory cache stores directory information found as a result of searching external nodes.

The concept of a cluster control point is critical to the operation of this invention. The cluster control point participates in directory searches, route computations, and propagation of topology database update messages. The CCP assists the external network in locating resources within the cluster and assists the internal network in locating external resources.

All internal links are activated using standard peer-to-peer network architecture protocols which include exchanging an SDLC command called an XID (exchange identification information) message between adjacent nodes. In the exchanged XIDs, each node identifies its control point (CP-CP) whether a CP-CP session is required, and whether it supports parallel transmission groups. During the XID exchanges, both nodes negotiate a unique number to identify the transmission group between them. Following the XID exchange, the two adjacent nodes establish a CP-CP session between them.

If the link is defined as external, the edge node will not activate it until it determines that there exists connectivity with an active cluster control point for the cluster. The node determines that the cluster control point is active from the internal topology database. If an active cluster control point exists, the node proceeds to activate the external link. In its XID, the edge node substitutes the name of the cluster control point for its own name. The edge node always identifies itself as being capable of supporting parallel transmission groups. While the edge node itself may not support parallel transmission groups, the cluster as a whole may do so.

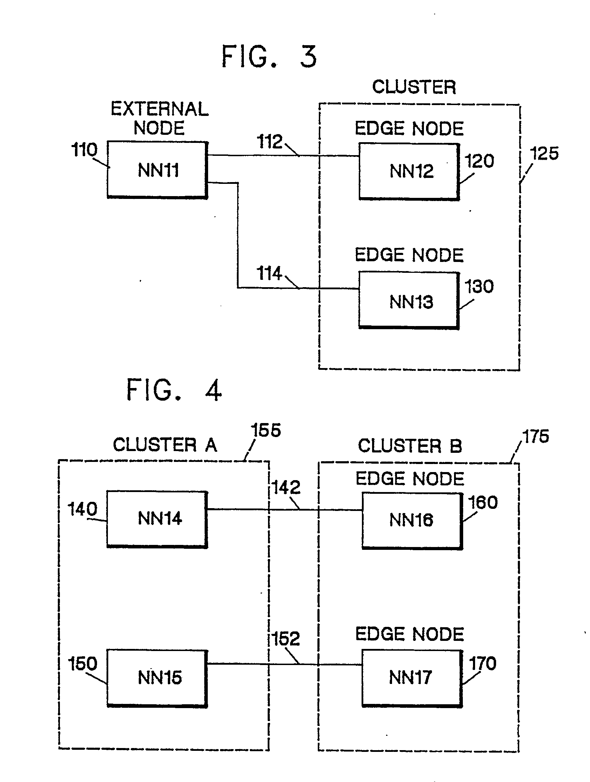

Figures 3 and 4 illustrate the necessity of having the edge node identify that it supports parallel transmission groups. In Figure 3, cluster 125 has edge nodes NN12 and NN13, identified by reference numerals 120 and 130, with external transmission groups 112 and 114 connected to the same external node NN11, identified by reference numeral 110. Figure 4 illustrates parallel transmission groups between two clusters 155, 175 with each cluster appearing as an external node to the other cluster. External transmission group 142 joins NN14 identified by reference numeral 140 with NN16 identified by reference numeral 160. Similarly, NN15 identified by reference numeral 150 is joined by external transmission group 152 to NN17 identified by reference numeral 170.

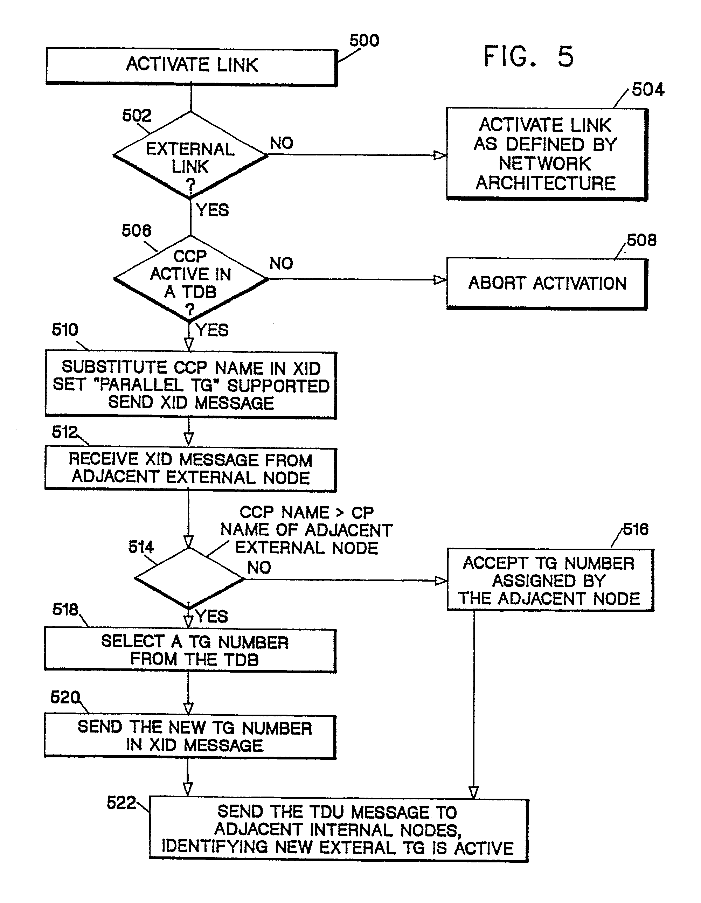

Figure 5 is a flow chart of the link activation algorithm at edge nodes. Block 500 is the process initiation block. In block 502, a determination is made whether the link is internal or external. Internal links are activated as defined by the distributed network architecture. Block 504 represents this processing. In the case of an external link, a test is made in block 506 to determine if a CCP is active in a topology database. Link activation is aborted in block 508 if there is no active cluster control point. In block 510, the edge node proceeds with link activation by substituting the cluster control point name for its name in its initial XID message, also indicating that parallel transmission groups are supported, then sending the XID message to the adjacent external node. In block 512, the edge node receives a XID message from the adjacent external node. Before a link is fully activated, both nodes must negotiate a unique transmission number. However, since the entire cluster acts to the outside as a single network node, it is required that this transmission group number be unique for the entire cluster.

In block 514, a comparison is made of the CCP name and control point name of the adjacent external node. If the control point name is higher in a collating order sense, the transmission group number assigned by the adjacent external node is accepted in block 516. Otherwise, the edge node picks the next sequentially higher transmission group number from the topology database in block 518. Since the internal topology database identifies the external transmission groups, the edge node can use this information to assign a new transmission group. In block 520, the edge node sends the selected transmission group number in another XID message. The final step in block 522 is to broadcast a topology database update message to the adjacent internal nodes identifying the actuated external transmission group. However, in this method, there exists a small time window where two edge nodes may assign the same transmission group number. This can happen in the illustration of Figure 3 if the adjacent external node 110 activates the links 112, 114 with two edge nodes 120, 130 of the same cluster simultaneously. In this case, both edge nodes 120 and 130 have the same copy of the internal topology database, and both nodes assign the same trans mission group number. Therefore, a way to deal with this problem must be provided including its detection and recovery leading to assignment of a correct transmission group number.

Simultaneous assignment of the same transmission group number by two edge nodes within a cluster can occur if all the following conditions are satisfied:

1. If both edge nodes have links with the same external node.
2. If both links are activated at approximately the same time.
3. If the control point names of both edge nodes within a same cluster are of higher collating order.
4. If the transmission group number between the external node and the edge node was not assigned in the previous link activation.

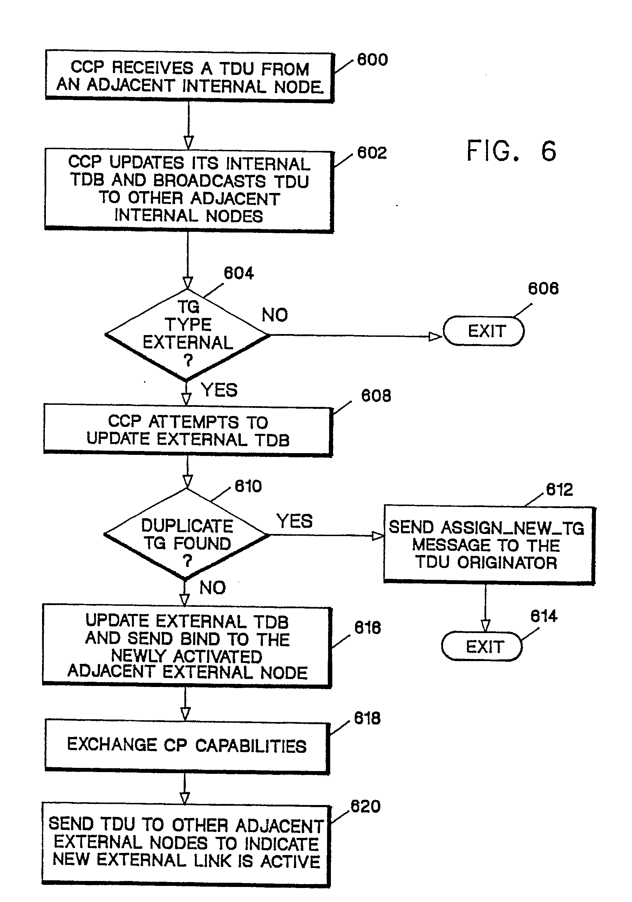

The occurrence of this situation will be detected by the cluster control point as shown in Figure 6. After activation of a transmission group, the edge nodes broadcast the topology database update message, causing each internal network node to update its topology database. The cluster control point also updates its internal topology database, but at the same time, it will attempt to update the external topology database. However, if another edge node has already used the same transmission group number, the cluster control point will detect the duplicate assignment. In this case, the cluster control point sends a ASSIGN_NEW_TG message to the edge node that sent the topology database update message. Upon receiving this message, the edge node searches through the topology database and picks another transmission group number. After it selects a new number, the edge node proceeds with a "non-activation XID exchange." Through the "non-activation XID exchange," the adjacent node is informed that the transmission group number is changed.

Nodes within a cluster can be involved in two types of CP-CP sessions. An internal CP-CP session is a session between two adjacent internal nodes that allows their control points, as defined by their CP name to communicate. Internal CP-CP sessions are activated based on information received in the XID message exchange. An external CP-CP session is a session connecting the control point of an external node adjacent to the cluster with the cluster control point. The adjacent external node is unaware that the other end of the session may not be in the adjacent node. The external node thinks it is communicating with a single adjacent node having the cluster control point name. However, the external node can be a single node illustrated by NN11 in Figure 3 or a cluster acting as a single node illustrated by cluster A in Figure 4. If the external node is actually a single node, it initiates the session. On the other hand, if the external node is a cluster, then the CP-CP session is between a pair of cluster control points.

Cluster control points operate and use CP-CP sessions in the same way as ordinary control points operate and use CP-CP sessions, i.e., to exchange the cluster control point's capability, to exchange topology database information, to handle topology database update messages and to participate in directory searches.

A cluster control point can initiate a CP-CP session when it receives an internal topology database update message that an external transmission group is activated. It does so by directing the standard message initiation message (called a BIND) to the control point name of the adjacent external node. Before initiating this CP-CP session, however, the cluster control point verifies that it doesn't already have existing CP-CP session with the external node. This could occur if some other edge node in the cluster activated the transmission group with the same external node. If the transmission group deactivated during a CP-CP session, the cluster control point initiates another session if an alternate path is available.

The cluster control point exchanges its external topology database and associated updates, on the CP-CP sessions with external network nodes adjacent to the cluster. In the external topology database, the entire cluster is represented as a single network node having the name of the cluster control point with the external transmission groups providing connectivity to the other external network nodes.

Any topology changes internal to the cluster are handled only by the internal network nodes. The topology changes are not visible externally. The internal topology database contains information about both internal and external links. Whenever any internal node activates or deactivates a transmission group, either internal or external, a topology database update message is broadcast within the cluster, resulting in an update of the internal topology database of each network node in the cluster.

Additional processing takes place in a cluster control point node. Figure 6 shows the processing algorithm for the processing of topology database update messages received in the cluster control point. Upon receiving the topology database update message (block 600), the node first updates its internal topology database in block 602. It checks the transmission group type in decision block 604 and, if it is an external transmission group, the CCP updates its external topology database (block 608) and creates a new topology database update message that it subsequently sends to all adjacent external network nodes.

At this point, in decision block 610, the cluster control point may detect problems in assignment of external transmission group numbers. If a problem is detected, the CCP sends an ASSIGN_NEW_TG message to the affected edge node in block 612 to change the transmission group number. The CCP initiates the CP-CP session in block 616, exchanges control point capabilities in block 618 and sends the topology database update message to adjacent external nodes in block 620.

The directory services function allows a node to discover the name of a node that contains or serves a target resource such as a logical unit. A network node in a distributed network generally has three mechanisms to find out where the resource is located as disclosed in copending application Serial No. 062,267 incorporated herein by reference. The mechanisms are from an internal cache, from a broadcast search, or from a directed search. Information in the internal cache can either be preloaded or updated as a result of broadcast searches. The broadcast search consists of searching all the network nodes for the one that contains or serves the target resource. The results are recorded in the requester's internal cache. The directed search consists of directing a search message known as a LOCATE to the single node in which the resource was last known to have resided from the contents of the requester's internal cache. Clustering requires modifications to the search algorithms.

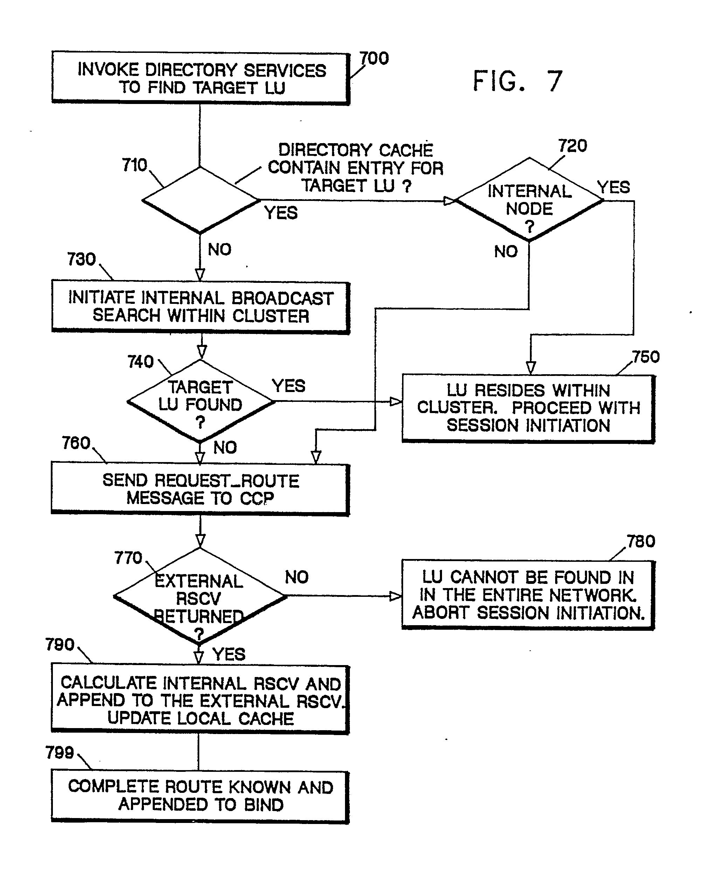

Referring to the flow chart in Figure 7, in block 700, a network node within a cluster initiates a search to find the node that owns a target resource. Block 710 indicates that the node first checks its own directory cache for an entry containing the target logical unit. If the resource is found, a determination is made in block 720 whether the node is internal. A positive response means that the logical unit is within the cluster and in block 750, session initiation is carried out. If the originating node's directory cache does not contain an entry for the target logical unit, the node initiates an internal broadcast search in block 730. If the target logical unit is found in decision block 740, the logical unit resides within the cluster (block 750). If the target resource is not found in a cluster, the originating node sends a REQUEST_ROUTE message to the cluster control point (block 760).

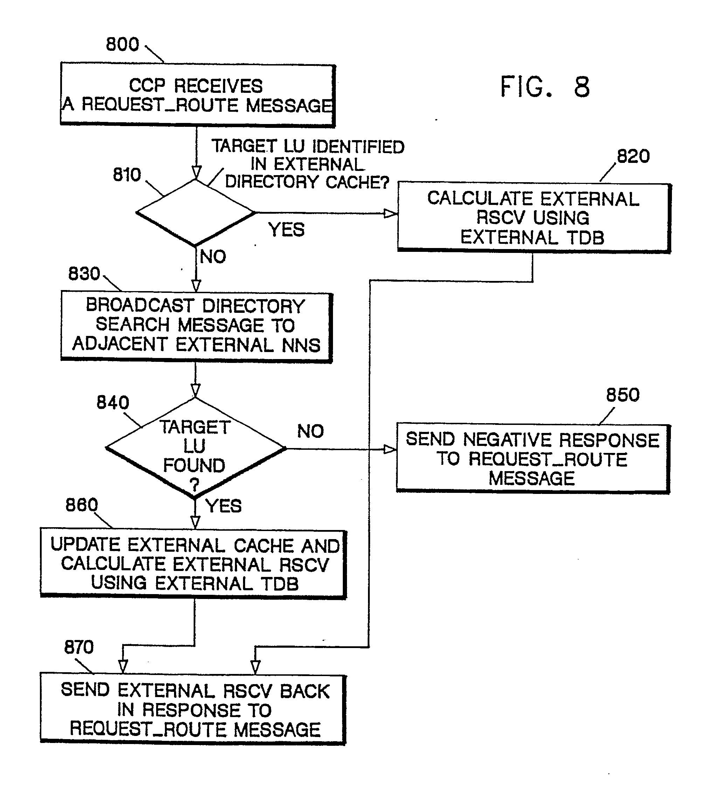

Figure 8 illustrates the processing algorithm for a REQUEST_ROUTE message received in a cluster control point (block 800). The cluster control point checks its external directory cache in block 810 for the target logical unit. If found, the cluster control point calculates the external route using the external topology database in logic block 820. The route is placed in a message referred to as the route selection control vector (RSCV) that is sent back to the originating node in block 870. The RSCV defines the path that a message will take and is an ordered sequence of nodes and transmission group names. If the target resource is not found in the external directory cache, a directory search message is broadcast to adjacent external network nodes in logic block 830. If the target resource is not found in block 840, the cluster control point returns a negative response to the originating node's REQUEST_ROUTE message (block 850). If the target resource is found, the cluster control point updates its external cache and calculates the external route using the external topology database as indicated in block 860. In block 870, the cluster control point sends the external route back to the originating node.

Referring back to Figure 7, the response to the REQUEST_ROUTE message is received back at the originating node in decision block 770. A negative response implies that the target resource cannot be found in the entire network and session initiation is aborted in logic block 780. A positive response leads to the calculation of the internal route, appending the internal route to the external route, and updating of the local cache as indicated in logic block 790. In logic block 799, the complete route has been determined and is appended to the session initiation message.

Alternatively the cluster control point can also identify itself as a central directory server for the cluster. In this case, any node internal to the cluster sends directory services request to the cluster control point rather than doing a broadcast search. The processing at the cluster control point is as follows:

1. The internal directory cache is searched first and if the CCP finds information, it returns it to the requester.

2. The external directory cache is searched next.

3. If neither cache contains the requested information, the CCP initiates an internal broadcast search within the cluster and if the target resource is found, the CCP records the result in the internal directory cache.

4. If the internal broadcast search does not find the resource, the CCP initiates an external broadcast search and if the target resource is found, the CCP records the result in the external directory cache.

If the CCP receives the broadcast search from the external network, it will first check its internal directory cache. If the target resource is registered in the internal directory cache, the CCP responds positively. If the target resource is not registered in this cache, the CCP continues with the broadcast search to the internal nodes as well as to the external nodes. The internal broadcast search is carried only to the adjacent nodes connected via the internal transmission groups. If the resource is found internally, the CCP saves this information in the internal directory cache. Negative results on internal searches can also be saved in the internal directory cache.

A network node may also be required to send a directed search request. In order to send a directed search, the originating node must attach the complete route (i.e., the RSCV) to be taken by the message. If the destination node is not defined in the internal topology database, the originating node sends a REQUEST_ROUTE message to the cluster control point which calculates the external route using the external topology database. The originating node then calculates the rest of the route that is within the cluster (internal RSCV) using the internal topology database and appends it to the external RSCV obtained from the cluster control point.

A session is initiated by sending a BIND message along the session's path to the destination node after determining the RSCV that defines the path that the BIND will traverse.

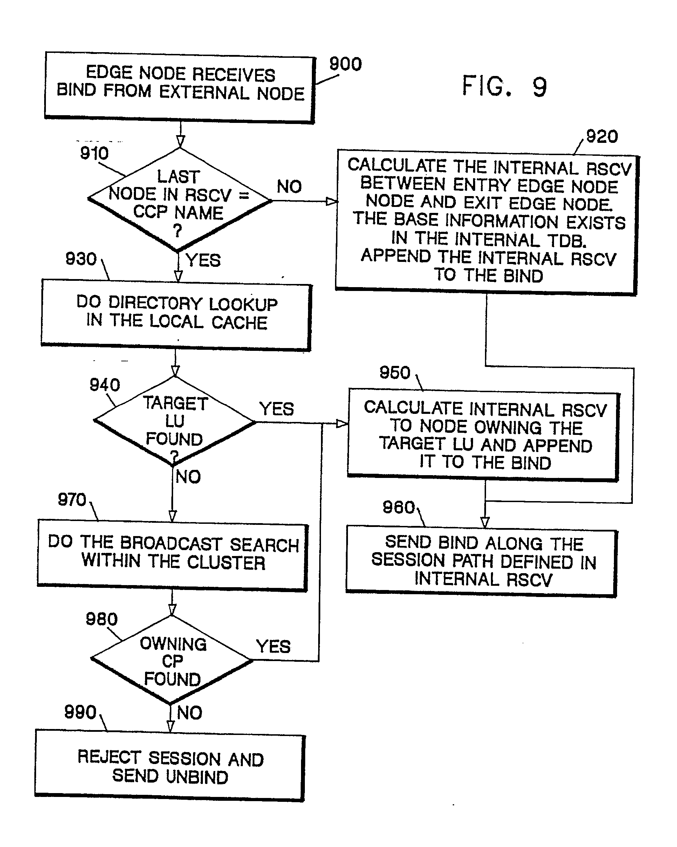

The processing is somewhat different when a session is initiated by an external node. The external nodes see an entire cluster as a single node. Figure 9 summarizes the processing performed when a BIND message is received by an edge node over an external link. The RSCV contained in the BIND will only identify the external transmission group and the cluster control point (block 900). However, on the external transmission group, the BIND really enters the edge node in which this transmission group terminates. If in decision block 910 the RSCV indicates that the session end point is somewhere within the cluster, the edge node calculates the path through the cluster to the destination logical unit. The edge node knows that the path terminates within the cluster whenever the last name in the RSCV is the cluster control point name. The edge node finds which node owns the logical unit from either its directory cache in logic block 930 or by doing an internal directory broadcast search in block 970. Once the destination node is known, the edge node calculates the internal RSCV in logic block 950 with the internal RSCV representing a path from the edge node to the destination node. The edge node attaches this internal RSCV to the RSCV received in the BIND message and continues to route the BIND along the session path as indicated in logic block 960. Since the full RSCV is returned in the BIND response, both the originating node and the destination node are aware of the full session path. If the target resource is not found in decision blocks 940 and 980, the session initiation is rejected and the UNBIND message is propagated.

If in logic block 910 the RSCV indicates that the session is only routed through the cluster, the edge node calculates the internal RSCV in logic block 920 and inserts it in the proper place in the RSCV received in the BIND message. The edge node continues to route the BIND message along the session path defined in the RSCV as indicated in logic block 960. The edge node calculates the internal route by using the internal topology database. The internal topology database also identifies the external transmission groups.

Certain situations are unique to the clustering environment and require special handling procedures. Three of particular concern are internal link failure, the loss of the cluster control point and the joinder of two or more clusters.

An internal link failure represents the failure of a link within a cluster. All sessions terminating in the external or internal nodes will be instantly terminated with an UNBIND message. Some of those sessions may be CP-CP sessions between the cluster control point and the adjacent network node. If connectivity between the edge nodes and the cluster control point still exist, the edge nodes will re-establish the broken CP-CP sessions. Similarly, ordinary sessions can be re-established when an alternate route exists.

The edge node may lose an active cluster control point due to either a failure of the cluster control point node or the loss of internal connectivity between the edge node and the cluster control point node. If connectivity is lost between the cluster control point node and the edge node, the cluster is effectively broken into two parts. When this condition occurs, active sessions terminating in the disconnected part of the cluster will be terminated including any external CP-CP sessions. To recover, the network operator must activate another node to act as a cluster control point for the part of the cluster that no longer has access to the cluster control point node.

An edge node waits a certain time interval for another cluster control point to become active before sending a non-activation XID message to inform the adjacent external network node that it has lost its control point. Currently active sessions will not be terminated. In order to prevent the external nodes from initiating new sessions with the part of the cluster that no longer has a connec tion with the cluster control point, the adjacent external network nodes send TDU messages indicating that the external transmission group is no longer active. Therefore, no new sessions are established through these external transmission groups.

When two or more clusters are joined into a single cluster, there are potentially several active cluster control points. The network operator either deactivates all but one of the cluster control points or all but one of the cluster control points will deactivate automatically. In the latter case, the simplest algorithm is for a first cluster control point to compare its name with another cluster control point name and if the other cluster control point name is higher in a collating order sense, the first cluster control point will send a TDU message removing itself as an active cluster control point. The deactivated cluster control points also terminate all of their external CP-CP sessions.

While the invention has been particularly shown and described with reference to the particular embodiment thereof, it will be understood by those skilled in the art that various changes in form and detail may be made therein without departing from the spirit and scope of the invention. In particular, any of the nodes within a cluster can, in actuality, represent another cluster of nodes. Multiple levels of recursion can be accommodated within the clustering scheme.

## Claims

1. A method of clustering nodes for reducing the processing and storage requirements at the network nodes in a distributed computer network, said method being characterized by the steps of:
grouping selected nodes into at least one node cluster based on predefined criteria,
designating one node internal to the cluster as the cluster control point,
maintaining an internal topology database at each node within said cluster that identifies all nodes internal to the cluster, the internal transmission groups between pairs of nodes in the cluster, and the external transmission groups between edge nodes within the cluster and adjacent nodes external to the cluster,
maintaining an external topology database at the cluster control point at each external node that identifies all external nodes and the external transmission groups both between pairs of external nodes and between said cluster control point and adjacent nodes external to the cluster,
establishing internal control sessions between the control points of adjacent internal nodes within said cluster, and

establishing external control sessions between said cluster control point and the control point of each adjacent node external to the cluster.

2. The method of claim 1 wherein said cluster control point assists the part of the network external to the cluster in locating resources within said cluster and assists the internal nodes in locating resources external to said cluster.

3. The method of claim 1 or 2 including the steps of activating internal transmission groups between pairs of internal nodes by exchanging identification messages between said internal nodes and negotiating a unique number for each of said internal transmission groups.

4. The method of claim 1, 2 or 3 including the steps of activating external transmission groups between edge nodes within the cluster and adjacent nodes external to the cluster by first determining from the internal topology database that the designated cluster control point is active, followed by each edge node and adjacent external node pair exchanging identification messages and negotiating a unique external transmission group number.

5. The method of any one of claims 1 to 4 further including the steps of maintaining an internal directory cache and maintaining an external directory cache at the cluster control point.

6. The method of claim 5 wherein the step of maintaining an internal directory cache includes recording the finding of resources within the cluster that were the objects of searches that were initiated by said cluster control point.

7. The method of claim 5 or 6 wherein the step of maintaining an external directory cache includes recording the finding of resources external to the cluster that were the objects of searches that were initiated by said cluster control point.

8. The method of any one of claims 1 to 7 wherein the step of maintaining an internal topology database at each node within the cluster includes the steps of broadcasting topology database update (TDU) messages from nodes internal to the cluster, receiving said TDU messages and updating the contents of the internal topology database at each node internal to said cluster.

9. The method of any one of claims 1 to 8 wherein the step of maintaining an external topology database at the cluster control point includes receiving topology database update (TDU) messages from edge nodes within the cluster, determining if the TDU message was sent to update the status of an external transmission group, and updating the contents of the external topology database and broadcasting the TDU message to each adjacent node external to the cluster if said TDU message updated the status of an external transmission group.

10. The method of claim 9 further including the steps of receiving TDU messages from nodes external to the cluster and updating the contents of the external topology database at the cluster control point.

11. A system for reducing the processing and storage requirements at the network nodes in a distributed computer network that has been partitioned into a plurality of clusters of arbitrary size based on a predetermined selection criteria with one node internal to each cluster functioning as the cluster control point for communication with the part of the network external to the cluster, said system being characterized in that it comprises :

internal topology database means at each node within the cluster for identifying all nodes internal to the cluster, the internal transmission groups between pairs of nodes in the cluster, and the external transmission groups between edge nodes within the cluster and adjacent nodes external to the cluster,

external topology database means at the cluster control point and at each external node for identifying all external nodes and the external transmission groups between pairs of said external nodes and between said cluster control point and the adjacent nodes external to the cluster,

means for establishing internal control sessions between the control points of adjacent internal nodes within the cluster,

means for establishing external control sessions between the cluster control point and the control point of each adjacent node external to the cluster, and

means for locating resources within said distributed computer network.

FIRST
CLUSTER
25

FIG. 1

SECOND
CLUSTER
75

FIG. 2

# FIG. 3

CLUSTER

EXTERNAL
NODE

EDGE NODE

110 | NN11 | 112 | NN12 | 120 | 125

EDGE NODE

114 | NN13 | 130

# FIG. 4

CLUSTER A | 155 | CLUSTER B | 175

EDGE NODE

140 | NN14 | 142 | NN16 | 160

EDGE NODE

150 | NN15 | 152 | NN17 | 170

FIG. 5

ACTIVATE LINK _500_

502 EXTERNAL LINK ? —NO→ ACTIVATE LINK AS DEFINED BY NETWORK ARCHITECTURE _504_

↓ YES

506 CCP ACTIVE IN A TDB ? —NO→ ABORT ACTIVATION _508_

↓ YES

_510_ SUBSTITUTE CCP NAME IN XID SET "PARALLEL TG" SUPPORTED SEND XID MESSAGE

_512_ RECEIVE XID MESSAGE FROM ADJACENT EXTERNAL NODE

CCP NAME > CP NAME OF ADJACENT EXTERNAL NODE

514 —NO→ ACCEPT TG NUMBER ASSIGNED BY THE ADJACENT NODE _516_

↓ YES

_518_ SELECT A TG NUMBER FROM THE TDB

_520_ SEND THE NEW TG NUMBER IN XID MESSAGE

_522_ SEND THE TDU MESSAGE TO ADJACENT INTERNAL NODES, IDENTIFYING NEW EXTERAL TG IS ACTIVE

FIG. 6

```
         ┌──────────────────────────┐  600
         │  CCP RECEIVES A TDU FROM  │
         │  AN ADJACENT INTERNAL NODE│
         └──────────────────────────┘
                      │
                      ▼
         ┌──────────────────────────┐  602
         │  CCP UPDATES ITS INTERNAL │
         │  TDB AND BROADCASTS TDU   │
         │  TO OTHER ADJACENT        │
         │  INTERNAL NODES           │
         └──────────────────────────┘
                      │
                      ▼
                     604
                  ╱───────╲          NO        ╭─────────╮  606
                 ╱   TG    ╲──────────────────▶│  EXIT   │
                ╱   TYPE    ╲                   ╰─────────╯
                ╲ EXTERNAL ╱
                 ╲    ?    ╱
                  ╲───────╱
                      │ YES
                      ▼                608
         ┌──────────────────────────┐
         │      CCP ATTEMPTS TO      │
         │    UPDATE EXTERNAL TDB    │
         └──────────────────────────┘
                      │
                      ▼
                     610
                  ╱───────╲      YES     ┌─────────────────────┐  612
                 ╱DUPLICATE╲─────────────▶│ SEND ASSIGN_NEW_TG  │
                 ╲ TG FOUND╱              │   MESSAGE TO THE    │
                 ╲    ?   ╱               │   TDU ORIGINATOR    │
                  ╲───────╱               └─────────────────────┘
                      │ NO                          │
                      ▼                             ▼
         ┌──────────────────────────┐           ╭─────────╮  614
         │  UPDATE EXTERNAL TDB      │  616      │  EXIT   │
         │  AND SEND BIND TO THE     │           ╰─────────╯
         │  NEWLY ACTIVATED          │
         │  ADJACENT EXTERNAL NODE   │
         └──────────────────────────┘
                      │
                      ▼
         ┌──────────────────────────┐  618
         │  EXCHANGE CP CAPABILITIES │
         └──────────────────────────┘
                      │
                      ▼
         ┌──────────────────────────┐  620
         │ SEND TDU TO OTHER ADJACENT│
         │ EXTERNAL NODES TO INDICATE│
         │ NEW EXTERNAL LINK IS ACTIVE│
         └──────────────────────────┘
```

13

FIG. 7

INVOKE DIRECTORY SERVICES TO FIND TARGET LU — 700

DIRECTORY CACHE CONTAIN ENTRY FOR TARGET LU ? — 710

720 — INTERNAL NODE ? — YES

710 — NO

730 — INITIATE INTERNAL BROADCAST SEARCH WITHIN CLUSTER

720 — NO

740 — TARGET LU FOUND ? — YES

750 — LU RESIDES WITHIN CLUSTER. PROCEED WITH SESSION INITIATION

740 — NO

760 — SEND REQUEST_ROUTE MESSAGE TO CCP

770 — EXTERNAL RSCV RETURNED ? — NO

780 — LU CANNOT BE FOUND IN IN THE ENTIRE NETWORK. ABORT SESSION INITIATION.

770 — YES

790 — CALCULATE INTERNAL RSCV AND APPEND TO THE EXTERNAL RSCV. UPDATE LOCAL CACHE

799 — COMPLETE ROUTE KNOWN AND APPENDED TO BIND

FIG. 8

**800**
CCP RECEIVES
A REQUEST_ROUTE MESSAGE

**810** TARGET LU IDENTIFIED
IN EXTERNAL
DIRECTORY CACHE?

YES → **820** CALCULATE EXTERNAL
RSCV USING
EXTERNAL TDB

NO

**830**
BROADCAST DIRECTORY
SEARCH MESSAGE TO
ADJACENT EXTERNAL NNS

**840** TARGET
LU
FOUND
?

NO → **850** SEND NEGATIVE RESPONSE
TO REQUEST_ROUTE
MESSAGE

YES

**860**
UPDATE EXTERNAL CACHE AND
CALCULATE EXTERNAL RSCV
USING EXTERNAL TDB

**870**
SEND EXTERNAL RSCV BACK
IN RESPONSE TO
REQUEST_ROUTE MESSAGE

FIG. 9

EDGE NODE RECEIVES
BIND FROM EXTERNAL NODE    900

910 → LAST NODE IN RSCV = CCP NAME ? — NO → 920 CALCULATE THE INTERNAL RSCV BETWEEN ENTRY EDGE NODE NODE AND EXIT EDGE NODE. THE BASE INFORMATION EXISTS IN THE INTERNAL TDB. APPEND THE INTERNAL RSCV TO THE BIND

YES

930 DO DIRECTORY LOOKUP IN THE LOCAL CACHE

940 TARGET LU FOUND ? — YES → 950 CALCULATE INTERNAL RSCV TO NODE OWNING THE TARGET LU AND APPEND IT TO THE BIND

NO

970 DO THE BROADCAST SEARCH WITHIN THE CLUSTER

960 SEND BIND ALONG THE SESSION PATH DEFINED IN INTERNAL RSCV

980 OWNING CP FOUND — YES

NO

990 REJECT SESSION AND SEND UNBIND